# FASCICULE DE BREVET EUROPEEN

(11) **EP 2 919 955 B1**
(45) Date de publication et mention de la délivrance du brevet: **02.08.2017**
(21) Numéro de dépôt: 13808075.9
(22) Date de dépôt: 12.11.2013
(51) Int. Cl.: B29B 11/16, F01D 5/28, B29L 31/08

(54) **PREFORME ET AUBE MONOBLOC POUR TURBOMACHINE**
MONOBLOCK-VORFORM UND SCHAUFEL FÜR EINE TURBOMASCHINE
MONOBLOC PREFORM AND BLADE FOR TURBO MACHINE

(30) Priorité: 13.11.2012 US 201261725632 P; 22.07.2013 US 201361856878 P
(43) Date de publication de la demande: 23.09.2015
(73) Titulaire: Snecma, 75015 Paris (FR); SAFRAN, 75015 Paris (FR)
(72) Inventeur: GIMAT, Matthieu, 77550 Moissy-Cramayel Cedex (FR); COUPE, Dominique, Marie, Christian, 33185 Le Haillan (FR)
(74) Mandataire: Joanny, Damien Henri Xavier
(86) Numéro de dépôt international: PCT/FR2013/052714
(87) Numéro de publication internationale: WO 2014/076408

(56) Documents cités:
- WO-A1-2013/079859
- WO-A1-2013/079860
- WO-A2-2013/104852
- FR-A1- 2 943 942

## Description

### DOMAINE DE L'INVENTION

Le présent exposé concerne une préforme fibreuse pour une aube de turbomachine ainsi qu'une aube monobloc formée au moyen d'une telle préforme, un carter intermédiaire et une turbomachine comprenant une telle aube.

Une telle préforme peut être utilisée pour réaliser en une seule pièce des aubes comprenant des plates-formes aérodynamiques. De telles aubes peuvent être notamment des aubes de redresseur et être intégrées dans le carter intermédiaire d'un turboréacteur d'avion par exemple.

### ETAT DE LA TECHNIQUE ANTERIEURE

Un turboréacteur classique à double flux comporte une soufflante dont le flux est divisé entre un flux primaire, dirigé vers les compresseurs, la chambre de combustion puis les turbines de la turbomachine, et un flux secondaire de dilution fournissant une part essentielle de la poussée.

Le flux secondaire circule dans une veine secondaire prévue entre le carter extérieur du réacteur et un carter intérieur renfermant la partie chaude de la turbomachine. Ces deux carters sont reliés et maintenus en place par un carter intermédiaire composé d'un moyeu intérieur, d'une virole extérieure et d'une pluralité de bras structuraux radiaux reliant le moyeu intérieur à la virole extérieure. Outre leur fonction structurale permettant de supporter les charges issues de la dynamique d'ensemble de la turbomachine, certains de ces bras structuraux sont creux et permettent ainsi le passage de servitudes telles que des canalisations de fluides, des câbles électriques ou encore des organes de transmission de puissance mécanique.

En outre, une telle turbomachine comprend un redresseur, composé d'une pluralité d'aubes fixes communément appelées OGV (« outlet guide vanes »), permettant de redresser le flux secondaire issu de la soufflante.

Afin de réduire la masse des turboréacteurs et le nombre de pièces les composant, il a été proposé des carters intermédiaires intégrant la fonction de redresseur dans lesquels certains bras structuraux ont été remplacés par des aubes OGV. Toutefois, de telles aubes doivent être munies d'éléments complémentaires, tels des plates-formes aérodynamiques ou des brides de fixation, qui sont rapportés sur l'aube et augmentent significativement la masse de l'ensemble, le nombre de pièces impliqué (en raison notamment de la visserie nécessaire à la fixation de ces éléments sur l'aube), et la complexité de la maintenance.

Pour améliorer certains des aspects évoqués, il a alors été proposé, notamment dans la demande de brevet français FR 2 956 876, de concevoir des modules prenant la forme de caissons composés de deux aubes en composites boulonnées sur des plates-formes intérieures et extérieures. Toutefois, si les progrès apportés par cette solution sont déjà sensibles, une telle solution implique encore un nombre important de pièces, notamment de visserie, que l'on aimerait réduire pour gagner encore de la masse et du temps de montage et de maintenance.

De telles problématiques de réduction de la masse ou du nombre de pièces utilisées, de gain de place ou de simplification des procédés de fabrication ne se rencontrent pas seulement au sujet des aubes de redresseurs mais concernent plus largement tous les types d'aubes du turboréacteur, et tout particulièrement les aubes de soufflante.

On connait également le document FR 2 943 942 qui décrit un procédé de fabrication d'une aube de turbomachine en matériau composite.

Il existe donc un réel besoin pour une préforme fibreuse, une aube, un carter intermédiaire et une turbomachine qui soient dépourvus des inconvénients inhérents aux systèmes connus précités.

### PRESENTATION DE L'INVENTION

Le présent exposé concerne une préforme fibreuse pour une aube de turbomachine, obtenue par tissage tridimensionnel monobloc, ladite préforme comprenant un premier tronçon longitudinal, apte à former un pied d'aube, un deuxième tronçon longitudinal, prolongeant le premier tronçon longitudinal, apte à former une partie de pale, et un premier tronçon transversal, s'étendant transversalement depuis la jonction entre les premier et deuxième tronçons longitudinaux, apte à former une première plate-forme.

Dans le présent exposé, les termes « longitudinal », « transversal », « inférieur », « supérieur » et leurs dérivés sont définis par rapport à la direction principale de l'aube considérée ; les termes « axial », « radial », « tangentiel », « intérieur », « extérieur » et leurs dérivés sont quant à eux définis par rapport à l'axe principal du carter intermédiaire et de la turbomachine. En outre, les termes « amont » et « aval » sont utilisés ici en référence au sens de l'avancement du tissage (flèches T dans les figures).

Grâce à cette préforme, il est possible de concevoir de manière monobloc une aube composée d'un pied d'aube, d'une partie de pale et d'une plate-forme : cette conception monobloc permet de réduire fortement le nombre de pièces à concevoir et à assembler. En particulier, on économise des pièces de visserie, et donc la masse et le coût qui leurs sont associés.

En outre, l'intégration de la plate-forme dans la conception et le dessin de l'aube elle-même engendre des pièces plus optimisées, ne nécessitant pas de surépaisseurs ou de rajouts pour permettre la fixation des différents éléments de l'aube. Ces aubes sont ainsi moins massives et offrent donc de substantielles économies en fonctionnement. Le choix des matériaux composites offre également un gain de masse important par rapport aux mêmes pièces réalisées en métal ou en céramique.

Naturellement, la maintenance d'une telle aube monobloc est également facilitée puisque les opérations de démontage sont réduites : en particulier, il est possible d'intervenir directement sous l'aile grâce à des fixations moins nombreuses et plus accessibles.

Dans un premier mode de réalisation de l'invention, la préforme comprend en outre un deuxième tronçon transversal, s'étendant transversalement depuis la jonction entre les premier et deuxième tronçons longitudinaux, dans le prolongement et à l'opposé du premier tronçon transversal, apte à former une deuxième plate-forme. Il est en effet souvent avantageux de munir l'aube d'une plate-forme intrados et d'une plate-forme extrados pour compléter la veine aérodynamique de part et d'autre de l'aube.

Dans ce mode de réalisation, le premier tronçon transversal est formé par au moins une partie d'un pan libre, ledit pan libre et ledit deuxième tronçon longitudinal étant tissés conjointement de manière déliée, ladite déliaison prenant naissance à la jonction entre les premier et deuxième tronçons longitudinaux.

Une telle déliaison offre l'avantage de tisser le pan libre correspondant au tronçon transversal dans la continuité du premier tronçon longitudinal, le rattachant ainsi structurellement à ce dernier, qui formera le pied d'aube, support de l'aube dans son ensemble, tout en prélevant de l'épaisseur en aval sur le deuxième tronçon longitudinal, qui formera la partie de pale, et qui nécessite donc d'être plus fine. Une telle frontière entre les premier et deuxième tronçons longitudinaux permet ainsi de dissocier le tissage de ce qui deviendra la partie structurale d'une part et la partie aérodynamique d'autre part : la transition d'épaisseur nécessaire entre ces deux parties est ici largement facilitée dans la mesure où la séparation du pan libre emporte déjà une part importante de cette épaisseur. Le deuxième tronçon transversal et ledit premier tronçon longitudinal sont tissé conjointement de manière déliée, ladite déliaison se terminant à la jonction entre les premier et deuxième tronçons longitudinaux. Ce mode de tissage permet de réduire avantageusement le nombre de couches consacrées au tissage des plates-formes en conservant les couches nécessaires à la réalisation du premier tronçon transversal dans le tronçon longitudinal.

Dans un deuxième mode de réalisation de l'invention, le premier tronçon transversal est formé par au moins des parties de premier et deuxième pans libres rabattus l'un sur l'autre, ledit premier pan libre et ledit premier tronçon longitudinal, d'une part, et ledit deuxième pan libre et ledit deuxième tronçon longitudinal, d'autre part, étant tissés conjointement de manière déliée, un croisement de couche étant prévu à la jonction entre les premier et deuxième tronçons longitudinaux de manière à ce que des fils du premier pan libre se prolongent dans le deuxième tronçon longitudinal et à ce que des fils du deuxième pan libre soient issues du premier tronçon longitudinal. Le deuxième tronçon transversal peut être formé de manière analogue.

Dans certaines applications, il est souhaitable d'avoir un pied d'aube assez fin, pour s'insérer dans des espaces réduits par exemple, ou une partie de pale conservant une certaine épaisseur, pour jouer un rôle structural supplémentaire par exemple : dans un tel cas, la transition d'épaisseur nécessaire entre le pied d'aube et la partie de pale, c'est-à-dire entre les premier et deuxième tronçons longitudinaux, peut être faible voire nulle. Un tel croisement de couche permet alors avantageusement d'assurer une telle continuité d'épaisseur entre les premier et deuxième tronçons longitudinaux.

Dans certains modes de réalisation, le nombre de couches de fils, et donc l'épaisseur, du deuxième tronçon longitudinal est évolutif. Ceci permet d'affiner la partie de pâle afin d'améliorer ses performances aérodynamiques.

Dans certains modes de réalisation, la préforme comprend un troisième tronçon transversal et un quatrième tronçon transversal, s'étendant transversalement de part et d'autre de l'extrémité amont du premier tronçon longitudinal, apte à former des brides de fixation de l'aube ; lesdits troisième et quatrième tronçons transversaux sont tissés conjointement de manière déliée, ladite déliaison s'achevant à l'extrémité amont du premier tronçon longitudinal. Grâce à cette préforme on intègre dans la conception et la réalisation de l'aube les brides qui permettront de la fixer dans la turbomachine : ceci amplifie les avantages déjà évoqués. En outre, les brides étant tissées directement dans le prolongement du pied d'aube, leur lien structural avec ce dernier est renforcé, ce qui assure une tenue mécanique d'ensemble accrue.

Dans certains modes de réalisation, la préforme comprend en outre un troisième tronçon longitudinal prolongeant le deuxième tronçon longitudinal, apte à former une tête d'aube, et un cinquième tronçon transversal, s'étendant transversalement depuis la jonction entre les deuxième et troisième tronçons longitudinaux, apte à former une troisième plate-forme. Certaines aubes sont fixes et s'étendent de part et d'autre d'une veine de fluide : dans un tel cas, la paroi extérieure de la veine peut nécessiter elle aussi la mise en place de plates-formes. Grâce à cette préforme on intègre également dans la conception et la réalisation de l'aube une telle plate-forme supérieure : ceci amplifie les avantages déjà évoqués.

Dans certains modes de réalisation, le cinquième tronçon transversal est obtenu par une déliaison analogue à celle réalisée pour le premier tronçon transversal.

Dans d'autres modes de réalisation, le cinquième tronçon transversal est obtenu par un croisement de couches analogue à celui réalisée pour le premier tronçon transversal.

Dans certains modes de réalisation, la préforme comprend de manière analogue un sixième tronçon transversal apte à former la seconde plate-forme supérieure : on obtient ainsi un couple de plates-formes supérieures intrados et extrados.

Dans certains modes de réalisation, la préforme comprend des septième et huitième tronçons transversaux analogues aux troisième et quatrième tronçons transversaux, aptes à former des brides supérieures.

Dans certains modes de réalisation, les fils utilisés pour le tissage de la préforme sont des fibres de carbone. Il peut toutefois s'agir de n'importe quel autre type de fil, par exemple des fibres de verre ou de kevlar.

Dans certains modes de réalisation, l'armure utilisée pour le tissage tridimensionnel de la préforme peut être du type interlock 3D. Toutefois, le tissage des surfaces externes de la préforme peut être essentiellement bidimensionnel, du type satin par exemple.

Le présent exposé concerne également une aube pour turbomachine comprenant un pied d'aube, une partie de pale, et une plate-forme s'étendant transversalement à la partie de pale au niveau de la jonction entre le pied d'aube et la partie de pale, ladite aube étant réalisée de manière monobloc en matériau composite au moyen d'une préforme fibreuse selon l'un quelconque des modes de réalisation précédents, ladite préforme ayant été mise en forme dans un moule et noyée dans une matrice.

Grâce à cette géométrie monobloc intégrant au moins un pied d'aube, une partie de pale et une plate-forme, on obtient les avantages décrits plus haut en termes de tenue mécanique, masse, coût, démontabilité et facilité de mise en oeuvre.

Dans certains modes de réalisation, la matrice est de type organique. Il peut notamment s'agir d'une résine époxy.

Dans d'autres modes de réalisation, la matrice est du type céramique.

Le présent exposé concerne en outre un carter intermédiaire pour turbomachine comprenant une pluralité d'aubes selon un des modes de réalisation décrits ci-dessus et disposées angulairement entre un moyeu intérieur et une virole extérieure.

Le présent exposé concerne également une soufflante pour turbomachine comprenant une pluralité d'aubes selon un des modes de réalisation décrits ci-dessus.

Le présent exposé concerne enfin une turbomachine comprenant au moins une aube ou un carter intermédiaire ou une soufflante selon l'un quelconque des modes de réalisations précédents.

Les caractéristiques et avantages précités, ainsi que d'autres, apparaîtront à la lecture de la description détaillée qui suit, d'exemples de réalisation de la préforme, de l'aube, du carter intermédiaire et de la turbomachine proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.
La FIG 1 est un plan en coupe d'une turbomachine selon l'invention.
La FIG 2 est une vue de face d'un carter intermédiaire selon un exemple de réalisation.
La FIG 3 est une vue en perspective d'une aube selon un premier exemple de réalisation non couvert par l'invention.
Les FIG 4A et 4B illustrent de manière schématique la préforme correspondant à ce premier exemple d'aube ainsi que sa mise en forme.
La FIG 5 illustre de manière simplifiée une déliaison.
La FIG 6 est un plan partiel et schématique, correspondant au cadre VI de la FIG 4A, du tissage de cette préforme.
Les FIG 7A et 7B illustrent de manière schématique un deuxième exemple de préforme non couverte par l'invention ainsi que sa mise en forme.
Les FIG 8A et 8B illustrent de manière schématique un premier exemple de préforme couverte par l'invention ainsi que sa mise en forme.
Les FIG 9A et 9B illustrent de manière simplifiée un croisement de couche.
Les FIG 10A et 10B illustrent de manière schématique un deuxième exemple de préforme couverte par l'invention ainsi que sa mise en forme.
Les FIG 11A et 11B illustrent de manière schématique des organisations de couches possibles pour le deuxième exemple de préforme de l'invention.

### DESCRIPTION DETAILLEE D'EXEMPLES DE REALISATION

Afin de rendre plus concrète l'invention, des exemples de réalisation sont décrits en détail ci-après, en référence aux dessins annexés. Il est rappelé que l'invention ne se limite pas à ces exemples.

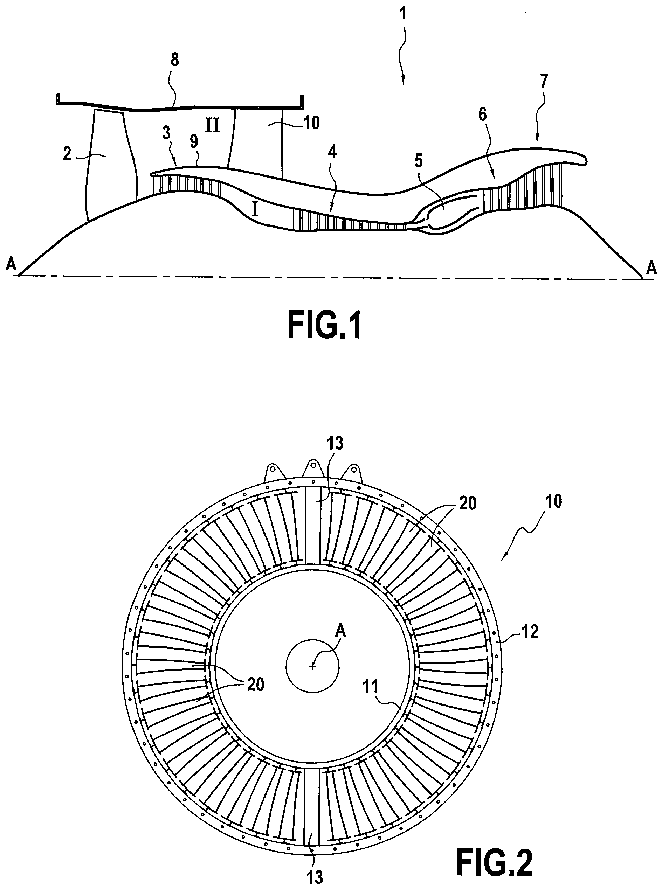

La FIG 1 représente, en coupe selon un plan vertical passant par son axe principal A, un turboréacteur à double flux 1 selon l'invention. Il comporte, d'amont en aval selon la circulation du flux d'air, une soufflante 2, un compresseur basse pression 3, un compresseur haute pression 4, une chambre de combustion 5, une turbine haute pression 6, et une turbine basse pression 7. Dans sa partie amont, ce turboréacteur 1 comprend un carter extérieur 8 et un carter intérieur 9 définissant deux veines concentriques primaire I et secondaire II. Un carter intermédiaire 10 relie les carters extérieur 8 et intérieur 9.

En fonctionnement, le carter intérieur 9 divise le flux accéléré par la soufflante 2 entre un flux primaire empruntant la veine primaire I et alimentant les compresseurs 3, 4, la chambre de combustion 5 et les turbines 6,7, et un flux secondaire empruntant la veine secondaire II et éjecté hors du turboréacteur, fournissant ainsi l'essentiel de sa poussée.

La FIG 2 représente de face, de manière schématique, un tel carter intermédiaire 10. Ce dernier comporte un moyeu intérieur 11, fixé sur le carter intérieur 9, et une virole extérieure 12, fixée dans le carter extérieur 8. Le moyeu intérieur 11 et la virole extérieure 12 sont reliés radialement, d'une part, par des bras structuraux 13 et, d'autre part, par des aubes de redresseur 20, communément appelées aubes OGV (pour « outlet guide vanes »).

Les bras structuraux 13 sont creux et permettent le passage de servitudes entre le coeur du réacteur enfermé dans le carter intérieur 9 et la périphérie du réacteur 1. De telles servitudes comprennent notamment des canalisations hydrauliques, des conduites pneumatiques, des câbles électriques ou encore des arbres de transmission de puissance mécanique. Ces bras structuraux sont situés préférentiellement à 6h et à 12h par rapport à l'axe A du turboréacteur 1, c'est-à-dire dans le plan vertical où s'accumulent le plus les charges mécaniques exercées par le poids propre du turboréacteur 1.

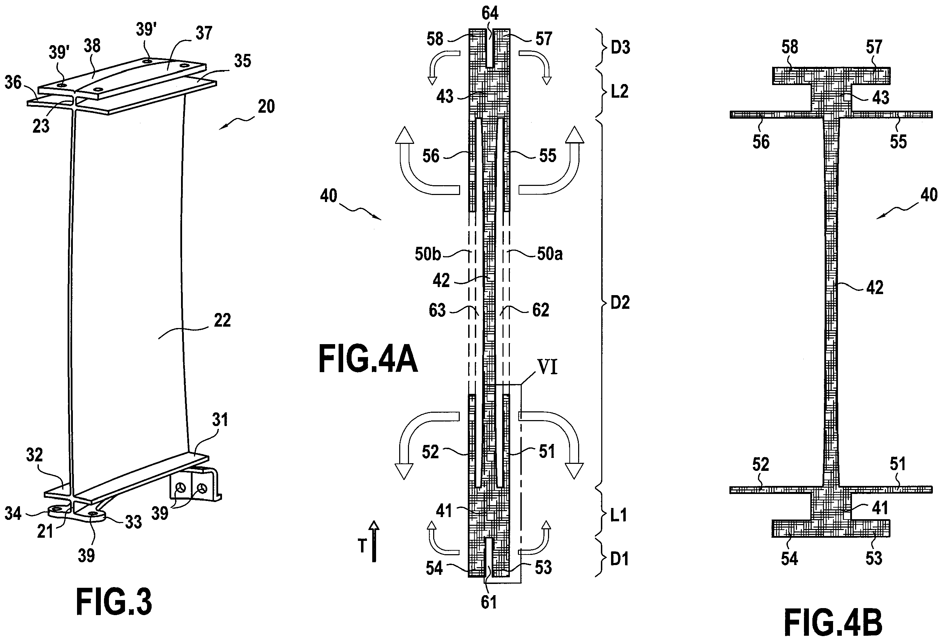

La FIG 3 présente un premier exemple d'aube de redresseur 20 pour un tel carter intermédiaire 10. Une telle aube 20 comporte un pied d'aube 21, une partie de pale 22 et une tête d'aube 23. La partie de pale 22 assure principalement la fonction aérodynamique de l'aube 20 tandis que le pied et la tête d'aube 21 et 23 assurent principalement la fixation et la tenue mécanique de l'aube 20.

Le pied d'aube 21 comporte à son extrémité inférieure des brides de fixation inférieures 33, 34, s'étendant sensiblement orthogonalement au pied d'aube 21, munies de perçages 39 permettant la fixation de l'aube 20 sur le moyeu intérieur 11 du carter intermédiaire 10.

La tête d'aube 23 comporte quant à elle à son extrémité supérieure des brides de fixation supérieures 37, 38, s'étendant sensiblement orthogonalement à la tête d'aube 23, munies de perçages 39' permettant la fixation de l'aube 20 sur la virole extérieure 12 du carter intermédiaire 10.

L'aube 20 comporte en outre des plates-formes inférieures intrados 31 et extrados 32 s'étendant sensiblement orthogonalement à la partie de pale 22, de part et d'autre de cette dernière, au niveau de la frontière entre le pied d'aube 21 et la partie de pale 22. Ces plates-formes inférieures 31, 32 permettent de masquer les éléments de fixations, vis ou boulons notamment, assurant la fixation des brides inférieures 33, 34, et donc de l'aube 20, et de reconstituer ainsi une paroi intérieure de veine II lisse et aérodynamique.

De même, l'aube 20 comporte des plates-formes supérieures intrados 35 et extrados 36 s'étendant sensiblement orthogonalement à la partie de pale 22, de part et d'autre de cette dernière, au niveau de la frontière entre la tête d'aube 23 et la partie de pale 22. Ces plates-formes supérieures 35, 36 permettent de masquer les éléments de fixations, vis ou boulons notamment, assurant la fixation des brides supérieures 37, 38, et donc de l'aube 20, et de reconstituer ainsi une paroi extérieure de veine II lisse et aérodynamique.

Dans cet exemple de réalisation, l'aube 20 comporte quatre plates-formes 31, 32, 35, 36 et quatre brides de fixation 33, 34, 37, 38 ; toutefois, dans d'autres exemples, certaines plates-formes et/ou certaines brides pourraient être absentes afin de se conformer à certains spécificités locales du carter intermédiaire 10 ou pour faciliter certains aspects du montage et de la maintenance.

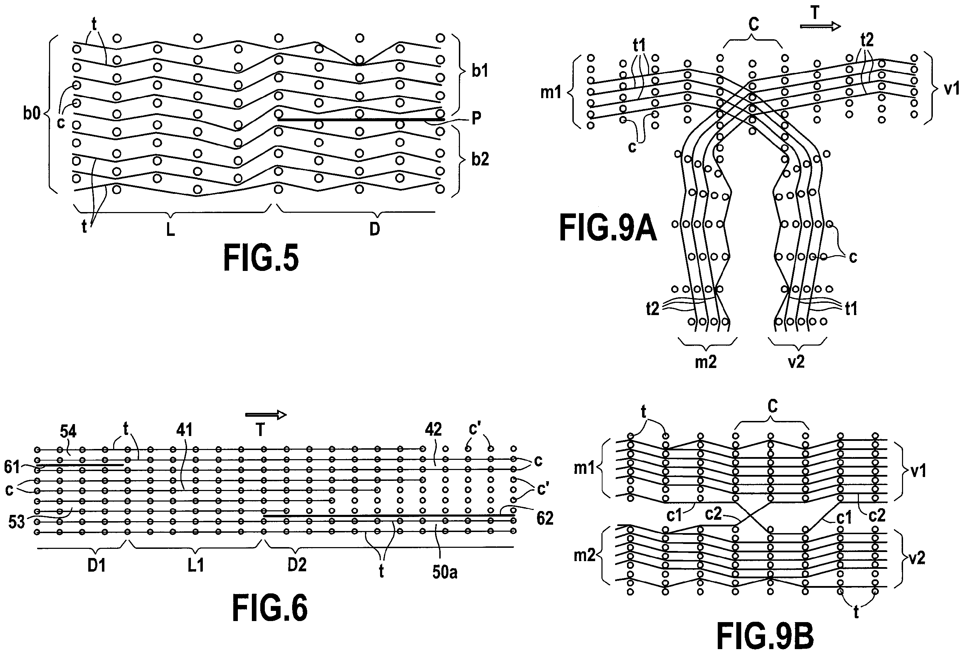

La FIG 4A représente la préforme 40 tissée tridimensionnellement permettant de réaliser ce premier exemple d'aube 20. La FIG 4B représente la même préforme 40 après sa mise en forme. Cette préforme 40 va être décrite d'amont en aval dans la direction T de tissage, c'est-à-dire du bas vers le haut des figures. Il va toutefois de soi que le tissage pourrait être réalisé à partir de l'autre extrémité et dans l'autre sens. La FIG 6 illustre également de manière schématique les structures essentielles du tissage de cette préforme 40 au niveau du cadre VI de la FIG 4A.

Dans cet exemple de réalisation, la préforme 40 est tissée tridimensionnellement en fibres de carbone selon une armure interlock 3D. Seules les surfaces de la préforme 40 sont tissées bidimensionnellement selon une armure de type satin.

A l'extrémité amont, le tissage débute par une première zone de déliaison D1 dans laquelle des troisième et quatrième tronçons transversaux 53, 54 sont tissés conjointement de manière déliée avec un plan de déliaison 61. Il faut noter ici que les qualificatifs « transversal » et « longitudinal » sont donnés en fonction de la position finale du tronçon considéré, les tronçons transversaux étant nécessairement tissés longitudinalement avant d'être repliés transversalement.

En aval de la première zone de déliaison D1, débute une première zone de liaison L1 dans laquelle les deux bandes précédentes 53, 54 sont réunies en un premier tronçon longitudinal 41 qui formera le pied 21 de l'aube 20.

Des méthodes de tissage permettant une telle déliaison sont désormais bien connues dans le domaine du tissage 3D. A titre d'illustration, la FIG 5 schématise de manière simplifiée un tel tissage délié. Dans la zone de liaison L, toutes les couches de fils de chaîne c (orthogonaux au plan de la figure) sont solidarisées les unes avec les autres par des fils de trame t (naviguant dans le plan de la figure), formant ainsi une bande unique b0. A l'inverse, dans la zone de déliaison D, deux bandes b1 et b2 sont tissées conjointement mais de manière déliée, c'est-à-dire avec des fils de trame t indépendants pour chaque bande b1, b2, de sorte qu'un plan de déliaison p est ménagé entre les deux bandes b1 et b2. Naturellement, une telle liaison peut être réalisée aussi bien dans le sens chaîne que dans le sens trame, donc aussi bien sur des torons de chaîne que des torons de trame.

En aval de cette première zone de liaison L1, débute une deuxième zone de déliaison D2 dans laquelle un premier pan libre 50a, un deuxième tronçon longitudinal 42, et un deuxième pan libre 50b sont tissés conjointement de manière déliée avec des plans de déliaison respectifs 62 et 63.

En outre, au sein de cette deuxième zone de déliaison D2, des sorties de couches sont réalisées progressivement le long du tissage T entre le deuxième tronçon longitudinal 42 et chacun des pans libres 50a, 50b. Ces couches sont ensuite réintégrées progressivement avant l'extrémité aval du deuxième tronçon longitudinal 42.

Des méthodes de tissage permettant de telles sorties de couches sont désormais bien connues dans le domaine du tissage 3D. Concrètement, comme cela est visible sur la FIG 6, les fils de trame t sont amenés à laisser libres certains fils de chaîne c', appelés « flottés » qui, détachés de tout fil de trame t, « flottent » et peuvent ainsi être éliminés ultérieurement par rasage : des couches entières ou partielles peuvent ainsi être éliminées, ce qui permet de réduire l'épaisseur de certains zones de la préforme. Dans cet exemple de réalisation, cela permet d'affiner le deuxième tronçon longitudinal 42 et donc la partie de pale 22 qui en est issue.

Il faut noter à ce sujet que ces sorties de couches sont réalisées ici au sein même de la préforme 40 en cours de tissage : les fils de chaîne flottés c' sont ainsi enfermés, et donc cachés, entre le deuxième tronçon longitudinal 42 d'une part et le pan libre 50a ou 50b d'autre part.

En aval de cette deuxième zone de déliaison D2, les trois bandes précédentes 50a, 42, 50b sont réunies au sein d'une deuxième zone de liaison L2 pour former un troisième tronçon longitudinal 43 qui formera la tête 23 de l'aube 20.

Enfin, en aval de cette deuxième zone de liaison L2, débute une troisième zone de déliaison L3 dans laquelle des septième et huitième tronçons transversaux sont tissés conjointement de manière déliée avec un plan de déliaison 64.

Une fois le tissage terminé, les pans libres 50a et 50b sont découpés de manière à former respectivement des premier et cinquième pans transversaux 51, 55, et des deuxième et sixième pans transversaux 52, 56. Ces quatre pans transversaux 51, 52, 55, 56 sont alors rabattus vers l'extérieur selon les flèches de manière à prendre leurs positions transversales finales : ils formeront respectivement les plates-formes inférieures intrados 31 et extrados 32, et supérieures intrados 35 et extrados 36.

Une fois les pans libres 50a et 50b découpés, les flottés c' résidant en surface du deuxième tronçon longitudinal 42 sont désormais accessibles et peuvent être rasés.

Enfin, les troisième, quatrième, septième et huitième tronçons transversaux 53, 54, 57, 58 sont rabattus vers l'extérieur selon les flèches de manière à prendre leurs positions transversales finales : ils formeront respectivement les brides inférieures 33, 34 et supérieures 37, 38. Une telle configuration finale de la préforme 40 est représentée sur la FIG 4B.

La préforme 40 peut être humidifiée pour l'assouplir et permettre un décadrage plus aisé des fibres. Elle est alors introduite dans un moule de formage dont l'espace intérieur est ajusté à la géométrie recherchée pour la préforme 40.

On sèche ensuite la préforme 40 afin que celle-ci se raidisse, bloquant ainsi la géométrie imposée lors de la mise en forme. La préforme 40 est enfin disposée dans un moule d'injection, aux dimensions de l'aube finale souhaitée 20, dans lequel on injecte une matrice, ici une résine epoxy. Une telle injection peut par exemple être réalisée par le procédé connu RTM (« resin transfer molding »). A l'issue de cette étape, on obtient alors une aube 20 en matériau composite composée d'une préforme 40 tissée en fibres de carbone noyée dans une matrice époxy. Des étapes d'usinage peuvent éventuellement compléter ce procédé pour finaliser l'aube 20.

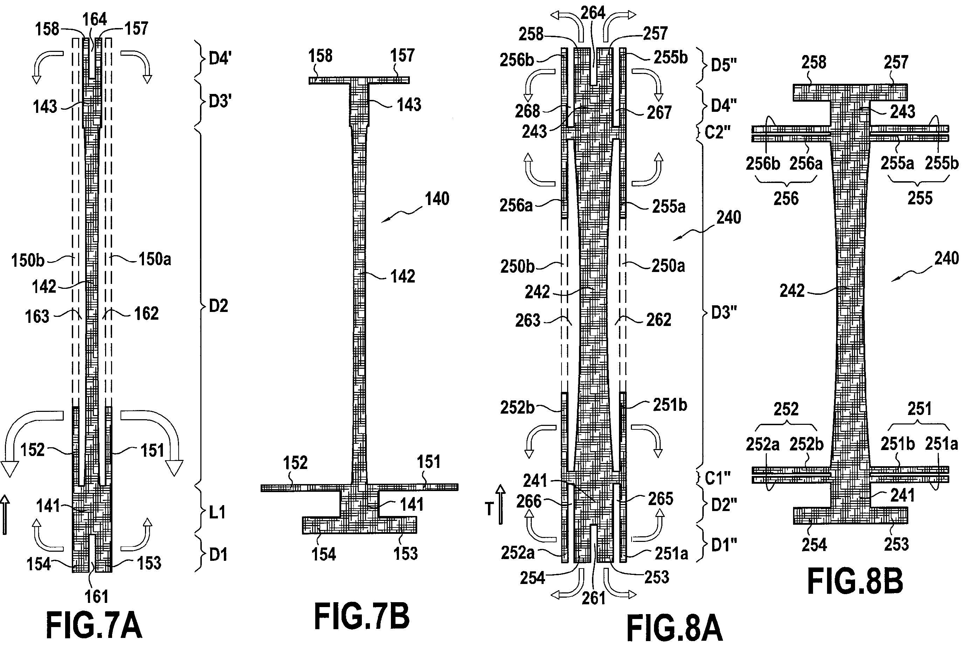

La FIG 7A représente un deuxième exemple de préforme 140 tissée tridimensionnellement permettant de réaliser un deuxième exemple d'aube en tout point analogue au premier exemple d'aube 20 si ce n'est qu'elle est dépourvue de plates-formes supérieures. La FIG 7B représente la même préforme 140 après sa mise en forme.

Le tissage de cette préforme 140 est en grande partie analogue à celui du premier exemple et ne sera donc pas décrit de nouveau intégralement.

Ainsi, d'amont en aval selon la direction T de tissage, le tissage commence par une première zone de déliaison D1, une première zone de liaison L1 et une deuxième zone de déliaison D2 analogues à celles du premier exemple. En revanche, cette deuxième zone de déliaison D2 se prolonge par une troisième zone de déliaison D3' dans laquelle le tissage délié des pans libres 150a, 150b se poursuit tandis qu'un troisième tronçon longitudinal 143 prolonge le deuxième tronçon longitudinal 142. En conséquence, le troisième tronçon longitudinal 143 est naturellement moins épais que dans le premier exemple. Il est possible de compenser cet effet à l'aide de techniques de transition d'épaisseur bien connues dans le domaine du tissage 3D.

Enfin, en aval de cette troisième zone de déliaison D3', une quatrième zone de déliaison D4' débute dans laquelle le tissage délié des pans libres 150a, 150b se poursuit tandis que la bande issue du troisième tronçon longitudinal 143 se divise de manière analogue au premier exemple pour former les septième et huitième tronçons transversaux 157 et 158.

La mise en forme de ce deuxième exemple de préforme 140 ainsi que le procédé de formation de l'aube finale sont également analogues à ceux du premier exemple. La configuration finale de la préforme 140 est représentée sur la FIG 7B.

La FIG 8A représente un troisième exemple de préforme 240 tissée tridimensionnellement permettant de réaliser une aube analogue au premier exemple d'aube 20. La FIG 8B représente la même préforme 240 après sa mise en forme. Cette préforme 240 partage un grand nombre de caractéristiques avec le premier exemple de préforme 40 : ces dernières ne seront pas décrites de nouveaux. La préforme 240 va être décrite d'amont en aval dans la direction T de tissage, c'est-à-dire du bas vers le haut des figures. Il va toutefois de soi que le tissage pourrait être réalisé à partir de l'autre extrémité et dans l'autre sens.

A l'extrémité amont, le tissage débute par une première zone de déliaison D1" dans laquelle un premier pan libre 251a du premier tronçon transversal 251, le troisième tronçon transversal 253, le quatrième tronçon transversal 254 et un premier pan libre 252a du deuxième tronçon transversal 252 sont tissés conjointement de manière déliée avec des plan de déliaison respectifs 265, 261 et 266.

En aval de la première zone de déliaison D1", débute une deuxième zone de déliaison D2" dans laquelle le tissage délié des premiers pans libres 251a, 252a des premier et deuxième tronçons transversaux 251, 252 se poursuit tandis que les bandes issues des troisième et quatrième tronçons transversaux 253, 254 sont réunies en un premier tronçon longitudinal 241 qui formera le pied 21 de l'aube 20.

En aval de cette deuxième zone de déliaison D2", une première zone de croisement de couche C1" forme interface avec une troisième zone de déliaison D3" dans laquelle un premier pan libre 250a, un deuxième tronçon longitudinal 222 et un deuxième pan libre 250b sont tissés conjointement de manière déliée avec des plans de déliaison respectifs 262 et 263.

Au niveau de la première zone de croisement de couche C1" s'opère un croisement de couche tel que les couches de fils issues des premiers pans libres 251a, 252a des premier et deuxième tronçons transversaux 251, 252 se prolongent vers le deuxième tronçon longitudinal 242 tandis que les couches de fils composant les pans libres 250a, 250b sont issues du premier tronçon longitudinal 241.

Des méthodes de tissage permettant un tel croisement de couche sont désormais bien connues dans le domaine du tissage 3D. A titre d'illustration, la FIG 9A schématise de manière simplifiée un tel croisement de couche. Dans la zone de croisement de couche C, les fils de trame t1 solidarisant les couches de fils de chaîne c d'une bande supérieure amont m1 sont déviés vers le bas afin de solidariser, en aval de la zone de croisement de couche C, les couches de fils de chaîne c d'une bande inférieure aval v2, tandis que les fils de trames t2 solidarisant les couches d'une bande inférieure amont m2 sont déviés vers le haut afin de solidariser les couches d'une bande supérieure aval v1. Ainsi, les fils de trame t1 et t2 se croisent au niveau de la zone de croisement de couche C. Associée à la technique de déliaison, cette technique de croisement de couche permet de tisser deux pans m2, v2 déliés dans le prolongement l'un de l'autre en leur assurant un rattachement solide à la nappe principale m1, v1.

Dans l'exemple précédent, une pluralité de fils t1 et t2 de chaque couche sont impliqués dans le croisement de couche ; toutefois, dans d'autres exemples tel celui de la FIG 9B, un seul fil c1, c2 de chaque couche peut être impliqué dans le croisement de couche. Cet autre exemple illustre également qu'un croisement de couche est réalisable aussi bien avec des fils de chaîne c1, c2 qu'avec des fils de trame t1, t2.

De retour aux FIG 8A et 8B et au tissage de la préforme 240, au sein de la troisième zone de déliaison D3", des sorties de couches sont réalisées progressivement le long du tissage T entre le deuxième tronçon longitudinal 242 et chacun des pans libres 250a, 250b. Ces couches sont ensuite réintégrées progressivement avant l'extrémité aval du deuxième tronçon longitudinal 242.

En aval de cette troisième zone de déliaison D3", une deuxième zone de croisement de couche C2" forme interface avec une quatrième zone de déliaison D4" dans laquelle un deuxième pan libre 255b du cinquième tronçon transversal 255, le troisième tronçon longitudinal 243 et un deuxième pan libre 256b du sixième tronçon transversal 256 sont tissés conjointement de manière déliée avec des plans de déliaison respectifs 267, 264 et 268.

Au niveau de la deuxième zone de croisement de couche C2" s'opère un croisement de couche tel que les couches de fils issues des pans libres 250a, 250b se prolongent vers le troisième tronçon longitudinal 243 tandis que les couches de fils composant les deuxièmes pans libres 255b, 256b des premier et deuxième tronçons transversaux 255, 256 sont issues du deuxième tronçon longitudinal 242.

Enfin, en aval de la quatrième zone de déliaison D4", débute une cinquième zone de déliaison D5" dans laquelle le tissage délié des deuxièmes pans libres 255b, 256b des premier et deuxième tronçons transversaux 255, 256 se poursuit tandis que la bande issue du troisième tronçon longitudinal 243 se divise de manière analogue au premier exemple pour former les septième et huitième tronçons transversaux 257 et 258.

Une fois le tissage terminé, les pans libres 250a et 250b sont découpés de manière à former respectivement le deuxième pan libre 251b du premier tronçon transversal 251 et le premier pan libre 255a du cinquième tronçon transversal 255, d'une part, et le deuxième pan libre 252b du deuxième tronçon transversal 252 et le premier pan libre 256a du sixième tronçon transversal 256 d'autre part.

Les premier et deuxième pans libres de chacun des tronçons transversaux 251, 252, 255 et 256 sont alors rabattus l'un vers l'autre selon les flèches de manière à prendre leurs positions transversales finales. Un collage ou une couture peut être prévue entre chaque premier et deuxième pan libre. Les tronçons transversaux 251, 252, 255 et 256 formeront respectivement les plates-formes inférieures intrados 31 et extrados 32, et supérieures intrados 35 et extrados 36 de l'aube 20.

Une fois les pans libres 250a et 250b découpés, les flottés c' résidant en surface du deuxième tronçon longitudinal 242 sont désormais accessibles et peuvent être rasés.

Enfin, les troisième, quatrième, septième et huitième tronçons transversaux 253, 254, 257, 258 sont rabattus vers l'extérieur selon les flèches de manière à prendre leurs positions transversales finales : ils formeront respectivement les brides inférieures 33, 34 et extérieures 37, 38.

Une telle configuration finale de la préforme 240 est représentée sur la FIG 8B. Le procédé de formation de l'aube 20 à partir de cette préforme 240 est analogue à celui du premier exemple.

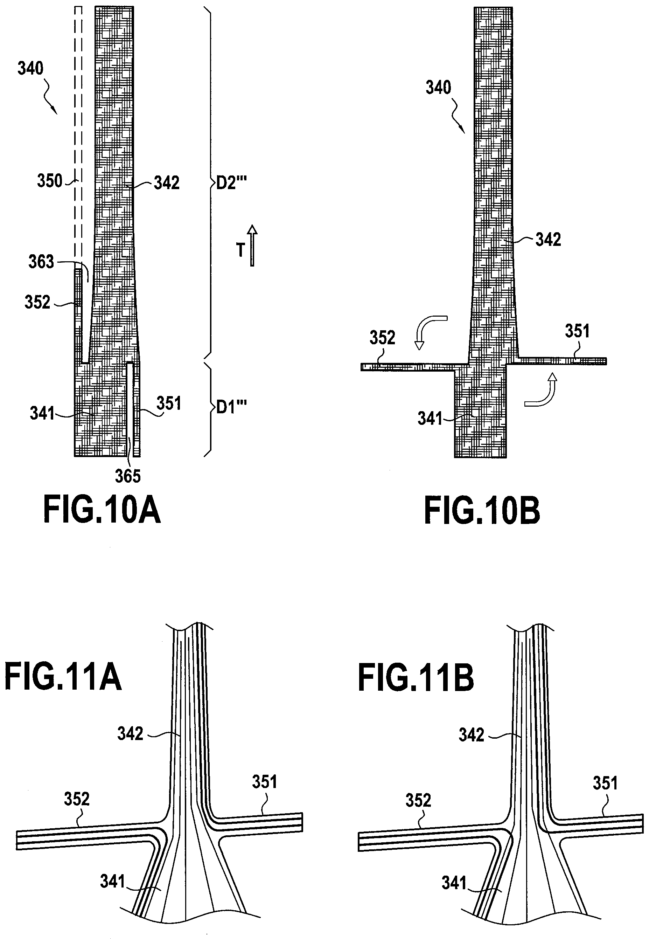

La FIG 10A représente un quatrième exemple de préforme 340 tissée tridimensionnellement permettant de réaliser un quatrième exemple d'aube. Contrairement aux trois premiers exemples décrits, ce quatrième exemple ne représente pas une aube de redresseur de carter intermédiaire mais une aube de la soufflante 2. Toutefois, la méthode de tissage décrite ci-dessous pourrait tout aussi bien s'adapter à d'autres types d'aubes et notamment à des aubes de redresseur. Dans un tel cas, il serait par exemple possible de prévoir des brides de fixations d'une manière analogue à l'un des trois premiers exemples de réalisation. La FIG 10B représente la même préforme 340 après sa mise en forme.

Le tissage de cette préforme 340 est en grande partie analogue à celui du premier exemple et ne sera donc pas décrit de nouveau intégralement. La principale différence réside dans l'utilisation de déliaisons « en relais » permettant de ne consacrer que N couches au tissage des plates-formes lorsque 2N couches étaient nécessaires dans les exemples précédents.

Ainsi, d'amont en aval selon la direction T de tissage, le tissage commence par une première zone de déliaison D1'" dans laquelle le premier tronçon transversal 351 et le premier tronçon longitudinal 341 sont tissés conjointement de manière déliée avec un plan de déliaison 365. Lors du tissage, le premier tronçon transversal 351 s'étend donc le long d'un premier côté, ici le côté droit, du premier tronçon longitudinal 341.

En aval de la première zone de déliaison D1'" débute une deuxième zone de déliaison D2'" dans laquelle un pan libre 350 et un deuxième tronçon longitudinal 342 sont tissés conjointement de manière déliée avec un plan de déliaison 363. Dans cette deuxième zone de déliaison D2"', le pan libre 350 s'étend donc le long du deuxième côté, ici le côté gauche, du deuxième tronçon longitudinal 342, à l'opposé du premier tronçon transversal 351. Ainsi, les couches du premier tronçon transversal 351 se prolongent dans le deuxième tronçon longitudinal 342 tandis que les couches du pan libre 350 sont issues du premier tronçon longitudinal 341.

Une fois le tissage terminé, le deuxième tronçon transversal 352 est obtenu par découpage du pan libre 350 de manière analogue aux exemples précédents. Dès lors, le premier tronçon transversal 351 et le deuxième tronçon transversal 352 sont rabattus vers l'extérieur selon les flèches de la FIG 10B de manière à prendre leurs positions transversales finales : ils formeront respectivement les plates-formes intrados et extrados de l'aube.

Les autres aspects de la mise en forme de ce quatrième exemple de préforme 340 ainsi que le procédé de formation de l'aube finale sont également analogues à ceux des exemples précédents. La configuration finale de la préforme 340 est représentée sur la FIG 10B. Cette préforme 340 étant destinée à former une aube de soufflante, on remarque qu'elle est dépourvue de troisième tronçon longitudinal et de troisième et quatrième tronçons transversaux.

Différentes transitions de couches peuvent être prévues à l'interface entre les zones de déliaison D1"' et D2"'. Dans un premier cas illustré à la FIG 11A, il s'agit de déliaisons simples dans lesquelles les couches du premier tronçon transversal 351 se prolongent linéairement dans le deuxième tronçon longitudinal 342 pour former les couches les plus externes de ce dernier ; de la même manière, les couches du pan libre 350 sont issues linéairement des couches les plus externes du premier tronçon longitudinal 341.

On remarque à cette occasion que l'on peut donner au premier tronçon longitudinal 341 une épaisseur importante près de son extrémité inférieure puis l'affiner ensuite en direction du deuxième tronçon longitudinal 342 à l'aide, notamment, sorties de couches. Ceci permet de donner au pied d'aube, qui sera issu de ce premier tronçon longitudinal 341, une forme en queue d'aronde, lui permettant d'être monté dans les alvéoles d'un disque de soufflante, tout en assurant la finesse de la pale qui sera issue du deuxième tronçon longitudinal 342.

La FIG 11B illustre une variante dans laquelle des croisements de couches sont prévus à l'interface entre les zones de déliaison D1'" et D2"'. Dans une telle variante, ce ne sont plus exclusivement les torons les plus externes du premier tronçon longitudinal 341, respectivement du deuxième tronçon longitudinal 342, qui forment le deuxième tronçon transversal 352, respectivement le premier tronçon transversal 351 : certains torons de ces tronçons transversaux 351, 352 proviennent ici de couches plus au coeur des tronçons longitudinaux 341, 342. L'utilisation de telles armures de croisement permet de mieux amortir le déséquilibre pouvant être généré par les déliaisons en relai D1'" et D2'" : la transition au niveau des plates-formes s'en trouve ainsi adoucie.

Un intérêt spécifique de ce quatrième exemple de réalisation est de réduire le nombre de couches consacrées au tissage des plates-formes. En effet, si chaque plate-forme possède N couches, une seule épaisseur de N couches, outre les couches des tronçons longitudinaux, est nécessaire pour tisser les deux plates-formes, alors que deux fois N couches, une fois de chaque côté, étaient nécessaires dans le cadre des trois premiers exemples.

Un premier avantage découlant directement de cette réduction du nombre de couches est la possibilité d'utiliser un métier à tisser dans une configuration plus simple ou, , de réaliser des aubes plus épaisses ou de plus grande complexité.

En outre, la transition d'épaisseur à l'interface entre le pied de l'aube et sa pale est moins importante, ce qui favorable.

Enfin, ce mode de tissage génère moins de chutes, ce qui réduit naturellement les coûts de production : en effet, dans ce dernier exemple, un seul pan libre doit être découpé contre deux pans libres dans les exemples précédents.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Préforme fibreuse pour une aube de turbomachine, obtenue par tissage tridimensionnel monobloc, comprenant
un premier tronçon longitudinal (241), apte à former un pied d'aube (21),
un deuxième tronçon longitudinal (242), prolongeant le premier tronçon longitudinal (241), apte à former une partie de pale (22), et
un premier tronçon transversal (251), s'étendant transversalement depuis la jonction entre les premier et deuxième tronçons longitudinaux (241, 242), apte à former une première plate-forme (31),
**caractérisée en ce que** le premier tronçon transversal (251) est formé par au moins des parties de premier et deuxième pans libres (251a, 251b) rabattus l'un sur l'autre, ledit premier pan libre (251a) et ledit premier tronçon longitudinal (241), d'une part, et ledit deuxième pan libre (251b) et ledit deuxième tronçon longitudinal (242), d'autre part, étant tissés conjointement de manière déliée, un croisement de couche (C1") étant prévu à la jonction entre les premier et deuxième tronçons longitudinaux (241, 242) de manière à ce que des fils du premier pan libre (251a) se prolongent dans le deuxième tronçon longitudinal (242) et à ce que des fils du deuxième pan libre (251b) soient issus du premier tronçon longitudinal (241).

2. Préforme selon la revendication 1, **caractérisée en ce qu'**elle comprend en outre un deuxième tronçon transversal (252), s'étendant transversalement depuis la jonction entre les premier et deuxième tronçons longitudinaux (241, 242), dans le prolongement et à l'opposé du premier tronçon transversal (251), apte à former une deuxième plate-forme (32).

3. Préforme fibreuse pour une aube de turbomachine, obtenue par tissage tridimensionnel monobloc, comprenant
un premier tronçon longitudinal (341), apte à former un pied d'aube (21),
un deuxième tronçon longitudinal (342), prolongeant le premier tronçon longitudinal (341), apte à former une partie de pale (22), et
un premier tronçon transversal (352), s'étendant transversalement depuis la jonction entre les premier et deuxième tronçons longitudinaux (341, 342), apte à former une première plate-forme (31),
un deuxième tronçon transversal (351), s'étendant transversalement depuis la jonction entre les premier et deuxième tronçons longitudinaux (341, 342), dans le prolongement et à l'opposé du premier tronçon transversal (352), apte à former une deuxième plate-forme (32),
**caractérisée en ce que** le premier tronçon transversal (352) est formé par au moins une partie d'un pan libre (350), ledit pan libre (350) et ledit deuxième tronçon longitudinal (342) étant tissés conjointement de manière déliée, ladite déliaison (D2"') prenant naissance à la jonction entre les premier et deuxième tronçons longitudinaux (341, 342), et
**en ce que** le deuxième tronçon transversal (351) et ledit premier tronçon longitudinal (341) sont tissés conjointement de manière déliée, ladite déliaison (D1"') se terminant à la jonction entre les premier et deuxième tronçons longitudinaux (341, 342).

4. Préforme selon l'une quelconque des revendications 1 à 3, **caractérisée en ce que** le nombre de couches de fils, et donc l'épaisseur, du deuxième tronçon longitudinal (242) est évolutif.

5. Préforme selon l'une quelconque des revendications 1 à 4, **caractérisée en ce qu'**elle comprend un troisième tronçon transversal et un quatrième tronçon transversal (253, 254), s'étendant transversalement de part et d'autre de l'extrémité amont du premier tronçon longitudinal (41), apte à former des brides de fixation (33, 34) de l'aube (20), et
**en ce que** lesdits troisième et quatrième tronçons transversaux (253, 254) sont tissés conjointement de manière déliée, ladite déliaison (D1) s'achevant à l'extrémité amont du premier tronçon longitudinal (41).

6. Préforme selon l'une quelconque des revendications 1 à 5, **caractérisé en ce qu'**elle comprend en outre
un troisième tronçon longitudinal (243) prolongeant le deuxième tronçon longitudinal (242), apte à former une tête d'aube (23), et
un cinquième tronçon transversal (255), s'étendant transversalement depuis la jonction entre les deuxième et troisième tronçons longitudinaux (242, 243), apte à former une troisième plate-forme (35).

7. Aube pour turbomachine, comprenant
un pied d'aube (21),
une partie de pale (22), et
une plate-forme (23) s'étendant transversalement à la partie de pale (22) au niveau de la jonction entre le pied d'aube (21) et la partie de pale (22),
**caractérisé en ce que** ladite aube (20) est réalisée de manière monobloc en matériau composite au moyen d'une préforme fibreuse (240) selon l'une quelconque des revendications 1 à 6, ladite préforme (40) ayant été mise en forme dans un moule et noyée dans une matrice, de préférence de type organique.

8. Carter intermédiaire pour turbomachine, **caractérisé en ce qu'**il comprend une pluralité d'aubes (20) selon la revendication 7, disposées angulairement entre un moyeu intérieur (11) et une virole extérieure (12).

9. Soufflante pour turbomachine, **caractérisée en ce qu'**elle comprend une pluralité d'aubes (2) selon la revendication 7.

10. Turbomachine, **caractérisée en ce qu'**elle comprend au moins une aube (20) selon la revendication 7 ou un carter intermédiaire (10) selon la revendication 8 ou une soufflante (2) selon la revendication 9.

## Patentansprüche

1. Faserige Vorform für eine Schaufel einer Turbomaschine, die durch einstückiges dreidimensionales Weben erhalten wird, umfassend
einen ersten Längsabschnitt (241), der geeignet ist, einen Schaufelfuß (21) zu bilden,
einen zweiten Längsabschnitt (242), der den ersten Längsabschnitt (241) verlängert und geeignet ist, einen Schaufelblattteil (22) zu bilden, und
wobei sich ein erster Querabschnitt (251) quer von der Verbindung zwischen den ersten und zweiten Längsabschnitten (241, 242) erstreckt und geeignet ist, eine erste Plattform (31) zu bilden,
**dadurch gekennzeichnet, dass** der erste Querabschnitt (251) von mindestens Teilen von ersten und zweiten freien Flächen (251 a, 251 b), die aufeinander umgelegt sind, gebildet ist, wobei die erste freie Fläche (251 a) und der erste Längsabschnitt (241) einerseits und die zweite freie Fläche (251 b) und der zweite Längsabschnitt (242) andererseits gemeinsam auf ungebundene Weise gewebt sind, wobei eine Schichtkreuzung (C1 ") an der Verbindung zwischen den ersten und zweiten Längsabschnitten (241, 242) vorgesehen ist, so dass sich Drähte der ersten freien Fläche (251a) in dem zweiten Längsabschnitt (242) verlängern, und Drähte der zweiten freien Fläche (251 b) aus dem ersten Längsabschnitt (241) hervorgehen.

2. Vorform gemäß Anspruch 1, **dadurch gekennzeichnet, dass** sie ferner einen zweiten Querabschnitt (252) umfasst, der sich quer von der Verbindung zwischen den ersten und zweiten Längsabschnitten (241, 242) in der Verlängerung und gegenüber dem ersten Querabschnitt (251) erstreckt und geeignet ist, eine zweite Plattform (32) zu bilden.

3. Faserige Vorform für eine Schaufel einer Turbomaschine, die , die durch einstückiges dreidimensionales Weben erhalten wird, umfassend
einen ersten Längsabschnitt (341), der geeignet ist, einen Schaufelfuß (21) zu bilden,
einen zweiten Längsabschnitt (342), der den ersten Längsabschnitt (341) verlängert und geeignet ist, einen Schaufelblattteil (22) zu bilden, und
einen ersten Querabschnitt (352), der sich quer von der Verbindung zwischen den ersten und zweiten Längsabschnitten (341, 342) erstreckt und geeignet ist, eine erste Plattform (31) zu bilden,
einen zweiten Querabschnitt (351), der sich quer von der Verbindung zwischen den ersten und zweiten Längsabschnitten (341, 342) in der Verlängerung und gegenüber dem ersten Querabschnitt (352) erstreckt und geeignet ist, eine zweite Plattform (32) zu bilden,
**dadurch gekennzeichnet, dass** der erste Querabschnitt (352) von mindestens einem Teil einer freien Fläche (350) gebildet ist, wobei die freie Fläche (350) und der zweite Längsabschnitt (342) gemeinsam auf ungebundene Weise gewebt sind, wobei die Ungebundenheit (D2"') an der Verbindung zwischen den ersten und zweiten Längsabschnitten (341, 342) ihren Ursprung nimmt, und
dass der zweite Querabschnitt (351) und der erste Längsabschnitt (341) gemeinsam auf ungebundene Weise gewebt sind, wobei die Ungebundenheit (D1"') an der Verbindung zwischen den ersten und zweiten Längsabschnitten (341, 342) endet.

4. Vorform gemäß einem der Ansprüche 1 bis 3, **dadurch gekennzeichnet, dass** die Anzahl von Drahtschichten und somit die Dicke des zweiten Längsabschnitts (242) evolutiv ist.

5. Vorform gemäß einem der Ansprüche 1 bis 4, **dadurch gekennzeichnet, dass** sie einen dritten Querabschnitt und einen vierten Querabschnitt (253, 254) umfasst, die sich quer beiderseits des stromaufwärtigen Endes des ersten Längsabschnitts (41) erstrecken und geeignet sind, Befestigungsflansche (33, 34) der Schaufel (20) zu bilden, und
dass die dritten und vierten Querabschnitte (253, 254) gemeinsam auf ungebundene Weise gewebt sind, wobei die Ungebundenheit (D1) am stromaufwärtigen Ende des ersten Längsabschnitts (41) endet.

6. Vorform gemäß einem der Ansprüche 1 bis 5, **dadurch gekennzeichnet, dass** sie ferner umfasst
einen dritten Längsabschnitt (243), der den zweiten Längsabschnitt (242) verlängert und geeignet ist, einen Schaufelkopf (23) zu bilden, und
einen fünften Querabschnitt (255), der sich quer von der Verbindung zwischen den zweiten und dritten Längsabschnitten (242, 243) erstreckt und geeignet ist, eine dritte Plattform (35) zu bilden.

7. Schaufel für eine Turbomaschine, umfassend
einen Schaufelfuß (21),
einen Schaufelblattteil (22), und
eine Plattform (23), die sich quer zum Schaufelblattteil (22) im Bereich der Verbindung zwischen dem Schaufelfuß (21) und dem Schaufelblattteil (22) erstreckt,
**dadurch gekennzeichnet, dass** die Schaufel (20) einstückig aus Verbundstoff mit Hilfe einer faserigen Vorform (240) gemäß einem der Ansprüche 1 bis 6 hergestellt ist, wobei die Vorform (40) in einer Gussform geformt und in eine Matrix, vorzugsweise organischen Typs, eingelassen wurde.

8. Zwischengehäuse für eine Turbomaschine, **dadurch gekennzeichnet, dass** es eine Vielzahl von Schaufeln (20) gemäß Anspruch 7 umfasst, die im Winkel zwischen einer Innennabe (11) und einem Außenring (12) angeordnet sind.

9. Gebläse für eine Turbomaschine, **dadurch gekennzeichnet, dass** es eine Vielzahl von Schaufeln (2) gemäß Anspruch 7 umfasst.

10. Turbomaschine, **dadurch gekennzeichnet, dass** sie mindestens eine Schaufel (20) gemäß Anspruch 7 oder ein Zwischengehäuse (10) gemäß Anspruch 8 oder ein Gebläse (2) gemäß Anspruch 9 umfasst.

## Claims

1. A fiber preform for a turbine engine blade or vane that is obtained by single-piece three-dimensional weaving, comprising:
a first longitudinal segment (241) suitable for forming a root (21);
a second longitudinal segment (242) extending the first longitudinal segment (241) and suitable for forming an airfoil portion (22); and
a first transverse segment (251) extending transversely from the junction between the first and second longitudinal segments (241, 242) and suitable for forming a first platform (31),
**characterized in that** the first transverse segment (251) is formed by at least portions of first and second free tails (251a, 251b) folded one onto the other, said first free tail (251a) being woven jointly and in non-interlinked manner with said second longitudinal segment (241), and also said second free tail (251b) being woven jointly and in non-interlinked manner with said second longitudinal segment (242), a layer crossing (C1") being provided at the junction between the first and second longitudinal segments (241, 242) so that the yarns of the first free tail (251a) are extended into the second longitudinal segment (242), and so that the yarns of the second free tail (251b) come from the first longitudinal segment (241).

2. A preform according to claim 1, **characterized in that** it further includes a second transverse segment (52) extending transversely from the junction between the first and second longitudinal segments (41, 42) extending the first transverse segment (51) and going away therefrom, suitable for forming a second platform (32).

3. A fiber preform for a turbine engine blade or vane that is obtained by single-piece three-dimensional weaving, comprising:
a first longitudinal segment (341) suitable for forming a root (21);
a second longitudinal segment (342) extending the first longitudinal segment (341) and suitable for forming an airfoil portion (22); and
a first transverse segment (352) extending transversely from the junction between the first and second longitudinal segments (341, 342) and suitable for forming a first platform (31),
a second transverse segment (351) extending transversely from the junction between the first and second longitudinal segments (341, 342), extending the first transverse segment and going away therefrom, suitable for forming a second platform (32)
**characterized in that** the first transverse segment (352) is formed by at least a portion of a free tail (350), said free tail (350) and said second longitudinal segment (342) being woven jointly in non-interlinked manner, said non-interlinking (D2"') beginning at the junction between the first and second longitudinal segments (341, 342), and
**in that** the second transverse segment (351) and said first longitudinal segment (341) are woven jointly in non-interlinked manner, said non-interlinking (D1"') terminating at the junction between the first and second longitudinal segments (341, 342).

4. A preform according to any one of claims 1 to 3, **characterized in that** the number of layers of yarns, and thus the thickness, of the second longitudinal segment (42) varies.

5. A preform according to any one of claims 1 to 4, **characterized in that** it includes a third transverse segment and a fourth transverse segment (53, 54) extending transversely on either side of the upstream end of the first longitudinal segment (41), and suitable for forming fastener flanges (33, 34) of the vane or blade (20); and
**in that** said third and fourth transverse segments (53, 54) are woven jointly in non-interlinked manner, said non-interlinking (D1) terminating at the upstream end of the first longitudinal segment (41).

6. A preform according to any one of claims 1 to 5, **characterized in that** it further comprises:
a third longitudinal segment (43) extending the second longitudinal segment (42) and suitable for forming a head (23); and
a fifth transverse segment (55) extending transversely from the junction between the second and third longitudinal segments (42, 43) and suitable for forming a third platform (35).

7. A blade or vane for a turbine engine, the blade or vane comprising:
a root (21);
an airfoil portion (22); and
a platform (23) extending transversely from the airfoil (22) at the junction between the root (21) and the airfoil portion (22);
said blade or vane (20) being **characterized in that** it is made as a single piece of composite material by means of a fiber preform (40) according to any one of claims 1 to 6, said preform (40) being shaped in a mold and embedded in a matrix, preferably of organic type.

8. An intermediate casing for a turbine engine, the casing being **characterized in that** it comprises a plurality of vanes (20) according to claim 7 arranged angularly between an inner hub (11) and an outer shroud (12).

9. A turbine engine fan, **characterized in that** it comprises a plurality of blades (2) according to claim 7.

10. A turbine engine, **characterized in that** it includes at least one blade or vane (20) according to claim 7, or at least one intermediate casing (10) according to claim 8, or at least one fan (2) according to claim 9.
